# EUROPEAN PATENT SPECIFICATION

(11) **EP 1 995 976 B1**
(45) Date of publication and mention of the grant of the patent: **18.08.2010**
(21) Application number: 08009513.6
(22) Date of filing: 23.05.2008
(51) Int. Cl.: H04N 9/70

(54) **Television receiver**
Fernsehempfänger
Récepteur de télévision

(30) Priority: 23.05.2007 JP 2007136543
(43) Date of publication of application: 26.11.2008
(73) Proprietor: Funai Electric Co., Ltd., Daito-shi, Osaka 574-0013 (JP)
(72) Inventor: Ikuwa, Akitsugu, Daito-shi, Osaka (JP)
(74) Representative: Grünecker, Kinkeldey, Stockmair & Schwanhäusser Anwaltssozietät

(56) References cited:
- EP-A- 0 616 474
- JP-A- 56 054 185
- JP-A- 60 125 092

## Description

This invention relates to television receivers, and in particular, to television receivers that switch over between color display and monochrome (black-and-white) display in accordance with the presence or absence of color burst signal.

Normally in case of television broadcasting signal or video signal, a color burst signal is inserted in the back porch immediately after the horizontal synchronization signal, and in a television the presence or absence of the color burst signal is detected by a color killer circuit, etc., to find out whether it is a color broadcasting or black-and-white broadcasting. The color killer circuit is a circuit to null color output and prevent occurrence of color noise on the screen, if the color burst signal is not detected.

When the airwave condition is not good and electric field intensity is weak, the S/N ratio is inclined to go down. For such reason, it sometimes happened that the color burst signal which normally should be included in the television broadcasting signal was not detected, causing the display to become black and white. The television receivers have always been associated with such problems relating to the airwave condition, and hence, various counter-measures are being taken accordingly.

As instances of technology to control the color killer operation depending on the electric field intensity, known are such technologies as: to turn the color killer circuit on or off according to the presence or absence of the color burst signal when input is from a strong electric field, while the color killer circuit is always turned off when input is from a weak electric field (e.g., **Japanese Patent Application Laid-open Publication No.**JP H06-105327A); to select an amplifier circuit for a color signal in the chrominance demodulator depending on whether the electric field is strong or weak (e.g., JP2005-117644A); to enable selection of changeover cycle for the chrominance subcarrier frequency used for detection of color burst depending on whether the electric field is strong or weak in case of a television receiver which is able to receive two kinds of television broadcasting signal, each having a different chrominance subcarrier frequency (e.g., **JPH05-191821A)**; and to enable color display even under poor reception condition of weak electric field by providing a delay in changeover of on or off of the color killer operation (e.g., JP2000-270342A).

However, the above technologies according to the patent documents 1 and 4 are to turn off the color killer operation automatically when input from a weak electric field and some other predetermined conditions are met, but are not to actually check presence or absence of color burst signal under the condition that input is from weak electric field This means that even if it is a black-and-white broadcast from a weak electric field, there might cause a glitch of showing a color display. The technologies in the patent documents 2 and 3 are neither to provide solution to the problem that the efficiency of detecting color burst signal goes down as the S/N ratio is deteriorated.

Reference JP 60125092 discloses a color killer device that is adapted to prevent color noise in a black-and-white signal in an intense electric field. From this reference, it is known that the width of a color burst gate signal changes in accordance with the signal-to-noise ratio of the video signal.

The present invention aims at providing television receivers which can enhance the efficiency in detecting color burst signal in case input is from a weak electric field and determine color display after confirming presence of color burst signals even when input is from a weak electric field.

This is achieved by the features of the independent claim. Preferred embodiments are subject matter of the dependent claims.

According to the present invention, whether the electric field is strong or weak as may be judged by the electric field intensity judging unit, is due in part to the electric field intensity of the airwave in the location of the receiving antenna which receives and supplies the broadcasting signal to the television receiver in the entire setup of receiving the broadcasting signal, though this does not necessarily exclude a recording medium as a picture signal source such as VHS from which the signal is to be inputted. In other words, the aforesaid electric field intensity judging unit is to perform judgment of the electric field intensity based actually on the synchronization signal and the S/N ratio. Therefore, even in case a recording medium is used as a video signal source to be inputted, the judgment of electric field intensity is made on the assumption that the video signal were being received by the antenna. As a result, if the recording medium is used as a video signal source to be inputted, the electric field intensity judging unit is only to determine the corresponding electric field intensity to be of normal strength always.

Additionally, the above signal intensity is to be judged by the strength of the synchronization signal to be inserted in the video signal (horizontal synchronization signal or vertical synchronization signal). Also, the predetermined threshold level is expressed, for example, by the ratio of the synchronization signal versus noise, namely, the signal/noise (S/N) ratio.

With the above configuration, the electric field intensity judging unit can judge the signal strength even if the strength of the inputted video signal goes down, and since the burst gate unit can properly control the starting position and the width of the burst gate pulse to be generated, the efficiency in detecting the color burst signal in a weak electric field can be enhanced more than in the past.

According to a preferred embodiment of the present invention, the configuration is made up in the manner that immediately after the television receiver is switched on, the burst gate unit will produce the burst gate pulse assuming the electric field is judged as normal by the aforesaid electric field intensity judging unit, and perform detection of the color burst signal. That is, in view of the present state of the world that generally the television receiver is used more widely in an environment of normal electric field than otherwise, it will be certain to shorten the starting time and ensure the convenience of broader-ranged users if the default condition immediately after start-up of the television receiver is so set up as to meet the normal electric field intensity.

According to the present invention, two kinds of registers each storing preset values of the burst gate pulse are to be prepared so that selection may be made as to which of the two registers the preset values are to be obtained from corresponding to the strength of the electric field. By composing the preset values conforming to the characteristic of each set and setting these values in the registers, it will become possible to produce the most suitable burst gate pulse without any change in the color burst detection programs. In short, the present invention is thus made applicable to plural types of television receivers with only a small change in design.

According to a preferred embodiment of the present invention, the burst gate pulse (it may be abbreviated as "BGP" hereafter) generated when the electric field is judged weak by the above electric field intensity judging unit, is preferred to be configured so that the time from the start of the horizontal synchronization signal to the end of BGP may be 7.559 to 8.500 microseconds and the time from the start of the horizontal synchronization signal to the start of BGP may be 4.500 to 4.596 microseconds.

Also, as yet another embodiment of the present invention, it is preferable if an automatic gain control (AGC) circuit to perform automatic gain control of intermediate frequency signal is provided so that the above electric field intensity judging unit may be configured to make judgment of the electric field intensity on the basis of the intermediate frequency automatic gain control (IF-AGC) voltage outputted from the above AGC circuit.

Such an AGC circuit is usually mounted on any television receiver, giving an output of voltage corresponding to the strength of the video signal, this output voltage being utilized for gain control of intermediate frequency, high-frequency amplification of the tuner, etc. Availing of this output from the conventional AGC circuit enables easy and economical realization of the present invention. In the present invention, the gain control of the tuner has a role auxiliary to the gain control of the intermediate frequency signal, and therefore, the configuration of utilizing the IF-AGC voltage used for the main gain control has been adopted. Needless to say, utilization of the radio frequency automatic gain control (RF-AGC) voltage cannot be excluded.

According to the present invention a microcomputer to receive input of the above picture signal is configured to generate burst gate pulse and judge if any color burst signal is detected in the burst gate pulse. With this configuration, the program of the microcomputer functions to find out if there is any color burst signal or not, without needing any complex circuit configuration nor any space for a circuit board. This helps reduce cost in putting the present invention into practice.

These and other features, aspects, and advantages of the invention will be apparent to those skilled in the art from the following detailed description of preferred non-limiting exemplary embodiments, taken together with the drawings and the claims that follow.

It is to be understood that the drawings are to be used for the purposes of exemplary illustration only and not as a definition of the limits of the invention. Throughout the disclosure, the word "exemplary" is used exclusively to mean "serving as an example, instance, or illustration." Any embodiment described as "exemplary" is not necessarily to be construed as preferred or advantageous over other embodiments.
Referring to the drawings in which like reference character(s) present corresponding parts throughout:
Fig. 1 is a block diagram showing the configuration of a television receiver according to the embodiment of the present invention.
Fig. 2 is an illustration explaining a burst gate pulse.
Fig. 3 is a flow chart of changeover processing of a burst gate pulse according to the intensity level of electric field.

The detailed description set forth below in connection with the appended drawings is intended as a description of presently preferred embodiments of the invention and is not intended to represent the only forms in which the present invention may be constructed and or utilized.
For purposes of illustration, programs and other executable program components are illustrated herein as discrete blocks, although it is recognized that such programs and components may reside at various times in different storage components, and are executed by the data processor(s) of the computers.
Explanation is given here of the embodiment of the present invention in the order shown below.
(1) Configuration of the television receiver
(2) Detection of the color burst signal
(3) Changeover processing of the burst gate pulse according to intensity level of electric field
(4) Conclusion

### (1) Configuration of the television receiver

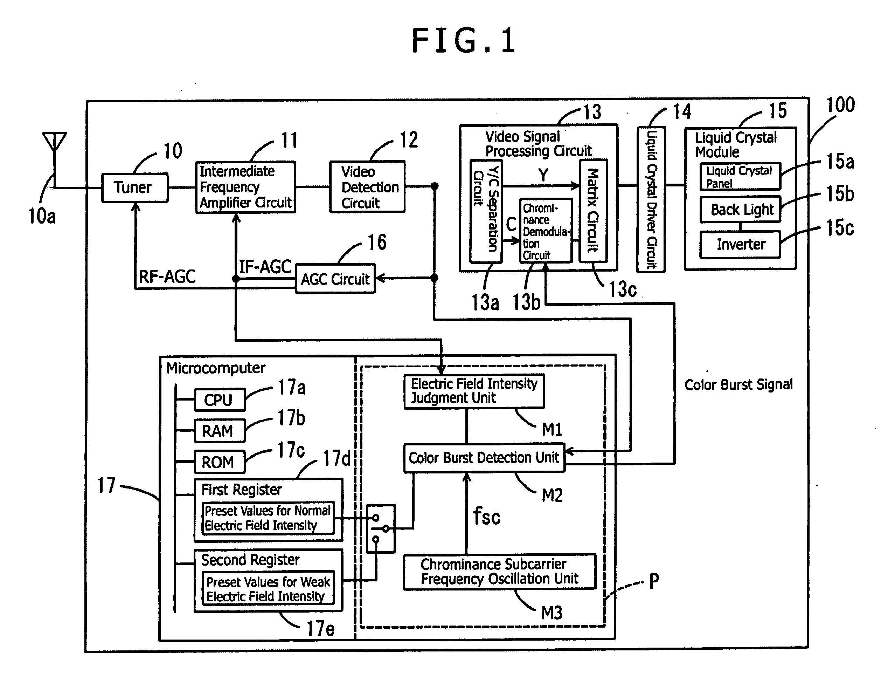

Referring to Fig. 1 to Fig. 3, explanation is made below of the television receiver according to the present invention. Fig. 1 is a block diagram showing the configuration of a television receiver according to the embodiment of the present invention. In reference to this embodiment, explanation is to be made taking as an example a liquid crystal television including a display unit of liquid crystal panel, but a CRT-based television or a plasma television may as well be taken instead as an example. It is all right even if the television set does not have a built-in display unit if it has a tuner at all. For instance, the present invention is applicable also to a recording and reproducing unit such as a HDD recorder and a DVD recorder. It should be noted that in Fig. 1, only the processing flows of video signals are shown for the sake of graphical simplification.

In Fig. 1, the television receiver 100 includes the tuner 10, the intermediate frequency amplifier circuit 11, the video detection circuit 12, the video signal processing circuit 13, the liquid crystal driver circuit 14, the liquid crystal module 15, the AGC circuit 16, and the microcomputer 17. To the television receiver 100, the antenna 10a is connected through an antenna terminal, and television airwaves received by the antenna 10a is inputted to the tuner 10.

As for the tuner 10, the PLL synthesizer system can be adopted as the channel tuning system, which can control receivable frequency by selecting a frequency dividing ratio of a fixed or variable frequency divider. This frequency control is conducted by the control of the microcomputer 17. According to the control of the microcomputer 17, the tuner 10 selects the carrier frequency corresponding to a desired channel, and while performing high-frequency amplification of the received frequency, converts it into an intermediate frequency by way of heterodyne detection. In this high-frequency amplification, the amplification factor is determined according to the RF-AGC voltage outputted from the AGC circuit 16 to be described afterward.

The intermediate frequency amplifier circuit 11 amplifies intermediate frequency signal to a required intensity. In this intermediate frequency amplification, the amplification factor is determined according to the IF-AGC voltage outputted from the AGC circuit 16 to be described afterward.

The video detection circuit 12 takes out carried signal (modulating signal) from a modulated signal (carrier signal + carried signal). In other words, the circuit takes out decoding video signal (brightness signal + suppressed-carrier quadrature two-phase modulated carrier chrominance signal + synchronizing signal) from intermediate frequency signal.

The AGC circuit 16 acquires the composite video signal (video detection output) outputted from the video detection circuit 12 and creates RF-AGC voltage and IF-AGC voltage according to the intensity of the video detection output. Generally, a strong electric field of airwaves (high-power input) brings about a high IF-AGC voltage, and a weak electric field of airwaves (low-power input) brings about a low IF-AGC voltage. This AGC circuit 16 is available in different types, such as a type outputting AGC voltage in proportion to the intensity of the synchronizing signal (e.g., a circuit called as peak-to-peak value type AGC), a type in which generation of voltage starts from the point the airwave has reached a certain intensity level (e.g., a circuit called keyed AGC), etc. Of course, it is possible to create an IF-AGC voltage having a negative relationship to strong or weak airwaves by reversing the places of strong and weak voltages.

The RF-AGC voltage is inputted to the tuner 10, which performs automatic gain control whereby the higher the RF-AGC voltage is, the lower the amplification factor will be. Likewise, the IF-AGC voltage is inputted to the intermediate frequency amplifier circuit 11, which also performs automatic gain control whereby the higher the IF-AGC voltage is, the lower the amplification factor will be. By way of the amplification carried out in the tuner 10 and the intermediate frequency amplifier circuit 11, the intensity of the video signal inputted to the video signal processing circuit 13 is going to be adjusted to ideal values standardized depending on the intensity of the synchronizing signal. Incidentally, the tuner 10 and the intermediate frequency amplifier circuit 11 are described here as being a forward type, but the present invention is realizable immutably no matter if these units are of reverse type.

The video signal processing circuit 13 amplifies the composite video signal further, performs Y/C separation at the Y/C separation circuit 13a to output the brightness signal (Y) to the matrix circuit 13c and the carrier chrominance signal (C) to the chrominance demodulation circuit 13b, and moreover, outputs the synchronizing signal yielding from synchronizing separation to the microcomputer 17.

The carrier chrominance signal thus separated is to be demodulated into R-Y and B-Y color-difference signals at the chrominance demodulation circuit 13b and outputted to the matrix circuit 13c. In the matrix circuit 13c, matrix conversion processing is carried out based on the input of the brightness signal and the color-difference signal, creating RGB signal as picture data. When there is an input of the color burst signal from the microcomputer 17, the chrominance demodulation circuit 13b demodulates the color-difference signal by utilizing the frequency of the color burst signal (chrominance subcarrier frequency). In other words, if the output of the color burst signal is ascertained, the signal is to be determined to be a color signal, and if the output of the color burst signal is absent, the signal is to be determined to be a black-and-white signal.

The liquid crystal driver circuit 14 includes the pixel count conversion circuit, the image quality adjusting circuit, the output processing circuit, and the frame memory. The pixel count conversion circuit applies scaling processing to the RGB signal inputted from the matrix circuit 13c, to produce one frameful of RGB signal necessary for display on the liquid crystal panel 15, which is then stored as the image data in the frame memory. The image quality adjusting circuit provides adjustment to the RGB signal stored in the frame memory by the pixel count conversion circuit, the adjustment relating to the points of brightness, contrast, black balance, and white balance. The output processing circuit applies gamma correction and dither processing to the RCB signal that has been given image quality adjustment by the image quality adjusting circuit while also has been added with background signal, OSD signal, blanking signal, etc., before the signal is outputted to the liquid crystal panel 15a for displaying of the image.

The liquid crystal module 15 includes the liquid crystal panel 15a, the back light 15b which illuminates the liquid crystal panel 15a from the back, and the inverter 15c which from the input of power-source voltage produces predetermined voltage to be supplied for lighting of the back light 15b. When the back light 15b is composed of discharge lamps, the inverter 15c converts the input of power-source voltage to AC voltage to be supplied to the back light 15b.

The microcomputer 17 includes the CPU 17a, the RAM 17b, ROM 17c, the firs register 17d (the first memory medium), and the second register 17e (the second memory medium). The microcomputer 17 is electrically connected to each part of the television receiver 100 and, by controlling each part organically, keeps the whole unit operating as a television set.

The CPU 17a reads out program data from the ROM 17c and, by spreading out the aforesaid data in the RAM 17b, carries out the BGP control program P. The BGP program P includes a plurality of modules (the electric field intensity judgment unit M1, the color burst detection unit M2, and the chrominance subcarrier frequency oscillation unit M3). When these modules M1 to M3 are operated actually, every means of the present invention can achieve concrete realization. Explanation is now made below of each module.

The electric field intensity judgment unit M1 determines the electric field intensity of airwaves incoming to the antenna 10a on the basis of the IF-AGC voltage outputted from the AGC circuit 16. The microcomputer 17 receives input of the IF-AGC voltage from the AGC circuit 16, and the electric field intensity judgment unit M1 acquires the IF-AGC voltage and examines if the voltage value is larger or smaller as compared to the predetermined threshold value. As the result of such examination, if the voltage is found equal to or higher than the predetermined threshold value, the input power is judged strong (normal electric field intensity), and if the voltage is found lower than the predetermined threshold value, the input power is judged weak (weak electric field intensity). It should be noted, however, that other external input such as a video input is to show a higher IF-AGC voltage than the predetermined threshold value leading to a judgment that the electric field is normal. The color burst detection unit M2 is to be notified of any judgment outcome.

The chrominance subcarrier frequency oscillation unit M3 oscillates the frequency fsc (= 3.579545 MHz), and supplies this frequency fsc to the color burst detection unit M2.

The color burst detection unit M2 performs detection of the color burst signal of the video signal (for example, the video detection output, etc.). The color burst detection unit M2 generates burst gate pulse (abbreviated as "BGP" hereinafter) and acquires the video detection output from the video detection circuit 12, and accepts input of frequency fsc from the chrominance subcarrier frequency oscillation unit M3. And, to the portion within the extent of BGP of the video detection output, synchronous detection is performed to find out if the frequency signal synchronizing with the frequency fsc is continuously included for a predetermined number of cycles (for example, 8 or more cycles), in order to judge whether or not the color burst signal is present within the extent of BGP. In case the synchronous detection has resulted affirmative, judgment is made to the effect that the color burst signal is present, also releasing this judgment of the signal being of color to the chrominance demodulation circuit. On the other hand, in case the synchronous detection has resulted negative, judgment is made to the effect that the color burst signal is absent, also releasing such judgment of the signal being of black-and-white to the chrominance demodulation circuit.

The color burst detection unit M2 is able to acquire preset values from the first register and the second register. Therefore, according to the notification from the electric field intensity judgment unit M1, the preset values stored in either register are to be used to generate BGP. In each of the first register and the second register, a different set of preset values was stored respectively prior to shipment from the factory. These preset values are representative of the time from the leader part (horizontal synchronization primitives) of the horizontal synchronization signal to the leader part of BGP, and the time from the leader part to the end.

### (2) Detection of the color burst signal

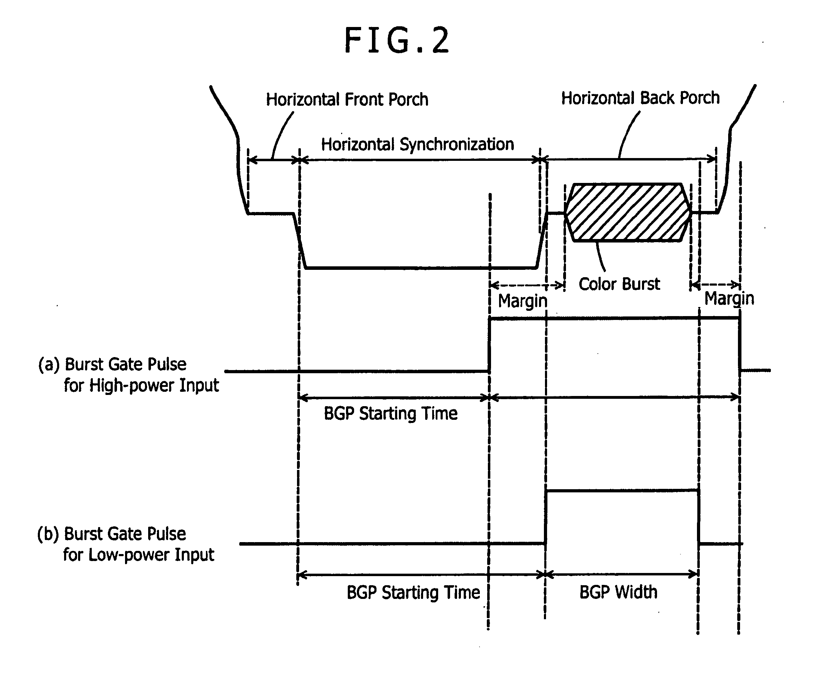

Secondly, explanation is made of a color burst signal and its detection in reference to Fig. 2. Fig. 2 is an illustration explaining a color burst signal. As shown in this drawing, BGP is specified by the BGP starting time representing the time from the horizontal synchronization datum to the BGP starting position and the BGP width representing the time from the BGP starting position to the BGP ending position. Normally, considering the possibility that the color burst position may get out of the position, the above BGP starting time and the BGP width are set up so as to have certain margins before and after the position where the color burst signal is assumed to be inserted.

The position where the color burst signal is inserted does not slip forward or backward in case of the video signal derived from a broadcasting signal, but slipping forward or backward may happen in case of a video signal read out from a VHS and other tape media. This is due to the fact the tape medium such as a VHS has some elastic possibility in itself depending on use environment, and that because of effect of elasticity, the video signal inputted on it may also be subject to being elongated or contracted.

On the contrary, the broadcasting signal transmitted by airwaves is free from being elongated or contracted, and the video signal derived from the broadcasting signal has the color burst signal inserted certainly in the position specified by the broadcasting signal protocol. Under such circumstances, the BGP to be used for detection of the color burst signal should be inclusive of the inserting position for the color burst signal as specified by the broadcasting signal protocol and provided with the predetermined margins before and after the inserting position,

Incidentally, the color burst signal might happen to be weak in intensity and become too much buried in noise to be detected. For example, while the S/N ratio of the television broadcasting signal received by antenna is commonly 70-80 dB, it sometimes goes down to 20 dB in case the electric field is weak. In case the S/N ratio becomes as low as 24 dB, noise affects adversely and makes it hard to detect the color burst signal, resulting that presently there is no other way but to accept black-and-white display. Although a video signal of low S/N ratio cannot produce a clear color display, there is also the demand on the other hand that color video source be displayed in color.

The above relationship between the color burst position and the intensity of the color burst signal may be summarized as follows. In case of high-power input, there can be counted two input video sources, namely, broadcasting signal input and external input (VHS, etc.), and for this reason, the position of color burst may be varied. But, in case of low-power input, input comes from nothing but the broadcasting signal. In other words, for high-power input the BGP width will need margins, but for low-power input, there is no variation in the position of the color burst, and hence the margins for the sake of BGP width can be either dispensed with or reduced.

The present invention, therefore, is to use the wide-spread BGP (the first burst gate pulse) as shown in Fig. 2(a) for high-power input (over 30 dB). That is, the BG is to start pulsing in the latter half of the horizontal synchronization signal on the adopted basis of the BGP starting time and the BGP width, while keeping the color burst inserting position (the standard position of the color burst signal) specified by the broadcasting signal protocol inclusive, More specifically, for example, the BGP starting time is to be set as 3.703 microseconds from the horizontal synchronization datum and the burst gate width is to be set as 4.740 microseconds. Configured as above, the BGP generated is able to detect the color burst signal read out from VHS, etc., too.

On the other hand, for weak-power input (30 dB or below), the BGP of narrowed width as shown in Fig. 2(b) is to be used. In other words, the BGP (the second burst gate pulse) which has smaller margins, as compared to the BGP in Fig. 2(a), in relation to the color burst inserting position, is to be used. The BGP starting time is to be determined so as to take place, for example, from the vicinity of the ending position of the horizontal synchronization signal to the position where insertion of a standard color burst signal is started. The BGP width is determined so that, for example, at least the first to eighth cycles of the color burst signal may be included within the range of the BGP.

In more detail, an indication is that the BGP width in case of low-power input is to include 8 to 12 cycles of chrominance subcarrier frequency (3.579545 MHz) or the frequency of the color burst signal. Typical value of the BGP starting time is 4.480 microseconds from the horizontal synchronization datum, and that of the burst gate width is 3.930 microseconds. Additionally, if the time from the horizontal synchronization datum to the end of the BGP is 7.559-8.500 microseconds and the time from the horizontal synchronization datum to the start of the BPG is 4.500-4.596 microseconds, it is experimentally ascertained that the present invention can prove its effect successfully.

If setup is made as above, it is certain that at least eight cycles of the color burst signal can remain within the range of the BGP, that reduction of margins before and after the BGP promises reduction of noise (improvement in S/N ratio), and that possibility of false detection, in which any noise component having cycle length close to the color burst signal is mistaken as the color burst signal, can be lowered. The foregoing means that even if any noise content having a frequency close to the chrominance subcarrier frequency fsc may occur before or after the color burst signal, this noise content stands out of the range of the BGP, and yet, in the stage of synchronization detection of the color burst signal, the color burst signal having a sufficient number of cycles for identification of the color burst signal (eight cycles, for example) can stay included within the BGP.

### (3) Changeover processing of the burst gate pulse according to intensity level of electric field

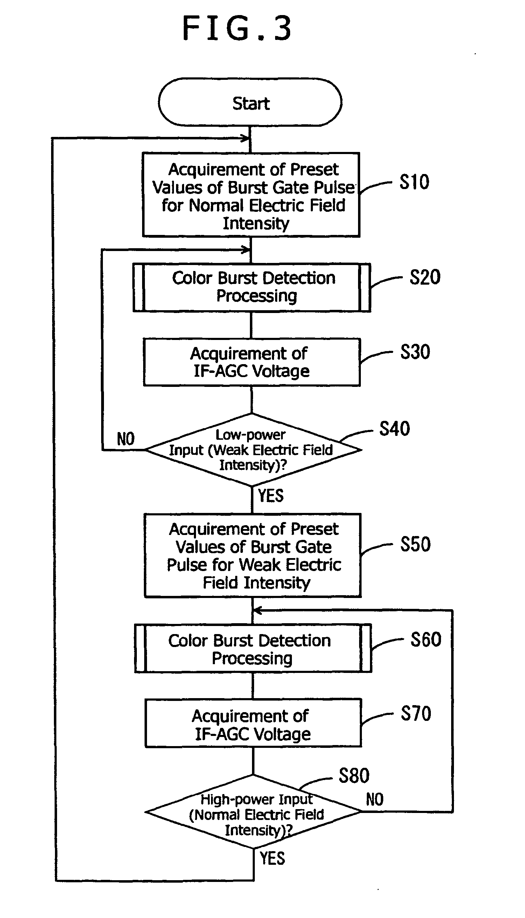

In reference to Fig. 3, explanation is made below about the changeover processing of the burst gate pulse according to the intensity level of electric field. Fig. 3 is a flow chart of changeover processing of a burst gate pulse according to the intensity level of electric field. The processing shown in Fig. 3 is continuously being executed as long as the television set is switched on. Provided, however, execution, or non execution, of this processing may as well be selected according to the user's setting. For instance, the user may well have the choice of executing this processing by providing a manual selector button for "color display for weak airwave" on the remote control, or using only the preset value (BGP for normal electric field) of the first register; or otherwise, the user may change over from either one to the other as he wants on a case-by-case basis.

When the power is switched on and the processing is started, the preset values of the BGP corresponding to the normal intensity of electric field are acquired at the step S10. That is to say, the preset values indicating the BGP starting time and the BGP width as default setting are to be acquired from the first register. These preset values are to generate the BGP in accordance with Fig. 2(a), and this default setting acquired at the step S10 continues to be used in operation unless the input turns out to be low-power.

At the subsequent step S20, the detection processing of the color burst signal. That is, the BGP is generated based on the preset values acquired at the step S10, and the detection of the color burst signal is tried from the video detection output existing within the extent of the BGP. When the color burst signal is detected, instruction is given to the chrominance demodulation circuit to output color signal, and when the color burst signal is not detected, the chrominance demodulation circuit is to be instructed to stop outputting the color signal.

At the subsequent step S30, the IF-AGC voltage is to be acquired as the information indicating the electric field intensity (receiving conditions and airwave conditions).

At the subsequent step S40, judgment is made of the electric field intensity. Specifically, judgment is made as to whether the IF-AGC voltage acquired at the step 30 is higher than a predetermined threshold value (for example, S/N ratio is 30 dB) or not In case the voltage is equal to or below a predetermined threshold value, the input is judged to be low-power (the condition is met), prompting the processing to move to the step S50; in case the voltage is over a predetermined threshold value, the input is judged to be high-power (normal electric field intensity) (the condition is not met), directing the processing back to the step S20 for repeated processing. In the above judgment of the electric field intensity, the video signal deriving from VHS, DVD, and other recording media is also to be judged as high-power input (normal electric field intensity).

At the subsequent step S50, the preset values for the BGP corresponding to the low-power input. Namely, the preset values indicating the BGP starting time and the BGP width are to be acquired from the second register. These preset values are to generate the BGP in accordance with Fig. 2(b).

At the subsequent step S60, the processing of detecting the color burst signal is performed using the preset values acquired at the step S50 and in a similar way as done at the step S20. However, the preset values used at the step S60 are different from those used at the step S20 in respect of the BGP starting time and the BGP width. Therefore, even if any noise content having a frequency close to the chrominance subcarrier frequency fsc may occur before or after the color burst signal, this noise content stands out of the range of the BGP. Consequently, the S/N ratio of the color burst signal improves; thus possibility of false detection, in which any noise component having cycle length close to that of the color burst signal is mistaken as the color burst signal, becomes much less, and occurrence of judgment due to false detection that the input signal source is black-and-white, is reduced.

At the subsequent step S70, the IF-AGC voltage is to be acquired as the information indicating the electric field intensity (receiving conditions and airwave conditions) as was the case at the step S30.

At the subsequent step S80, judgment is made of the electric field intensity. Specifically, judgment is made as to whether the IF-AGC voltage acquired at the step S70 is higher than a predetermined threshold value or not. In case the voltage is higher than a predetermined threshold value, the input is judged to be high-power (normal electric field intensity) (the conditions are met), prompting the processing to move to the step S10 in order to carry out the color burst detection processing suitable for the normal electric field intensity (S20 to S40). In case the voltage is below a predetermined threshold value, the input is judged to be low-power (weak electric field intensity) (the condition is not met), directing the processing to repeat the color burst detection processing suitable for the weak electric field intensity (S60 to S80).

### (4) Conclusion

Summarizing the foregoing, the television receiver according to the present invention is to be provided with the electric field intensity judgment unit M1 and the burst gate unit. The electric field intensity judgment unit M1 determines that the electric field is of normal intensity in case the intensity of the video signal inputted from the electric field is over the predetermined threshold value and that the electric field is of weak intensity in case the intensity of the video signal inputted from the electric field is equal to or below the predetermined threshold value. When the electric field intensity is judged normal by the electric field intensity judging unit, pulsing starts from the latter half of the horizontal synchronization signal and generates the first burst gate pulse with the pulse width inclusive of the inserting position of the color burst signal specified by the broadcasting signal protocol; and when the electric field intensity is judged weak by the electric field intensity judging unit, pulsing starts and generates the second burst gate pulse with the pulse width narrower than the first burst gate pulse and inclusive of the standard inserting position within the range of the width. The burst gate unit is to judge whether or not the color burst signal is detected within the range of the first gate pulse or the second burst gate pulse. Even in case the input from the electric field is weak, the above configuration and operation of the electric field intensity judgment unit M1 and the burst gate unit contribute to enhancing the efficiency in detection of the color burst signal and make it possible to show color display after actually ascertaining the presence of the color burst signal.

Even in case a closed caption is inserted immediately after the horizontal synchronization signal at line 21 or line 284, no problem has ever occurred in acqluiring the color burst using the BGP with a width narrower than usual according to the present invention. In other words, even if the BGP is made narrower in width, it is possible to acquire clock run-in inserted immediately after the color burst in line 21 or line 284. Therefore, it is noted here in addition that the present invention is well applicable to the television receiver mounted with such parental controls as CCD or V-chip.

It is to be understood that the present invention is not limited to the above-mentioned embodiments. Modifications and variations including the cases mentioned below, which may easily occur to persons skilled in the art, should be considered a part of embodiments hereof and within the scope of the present invention.
- Members and configurations disclosed in the above embodiments and exchangeable with each other may be used by properly modifying the combinations.
- Publicly known technology and technique not disclosed in the above embodiments but exchangeable with the members and configurations disclosed in the above embodiments, may be used properly in combination with and/or by exchanging for the members and configurations.
- Any substitute members and configurations not disclosed in the above embodiments which, based on publicly known technical knowledge, persons skilled in the art can assume usable for the members and configurations disclosed in the above embodiments, may be used properly through substitutions or modified combinations.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art.
It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.
In addition, reference to "first," "second," "third," and etc. members throughout the disclosure (and in particular, claims) is not used to show a serial or numerical limitation but instead is used to distinguish or identify the various members of the group.

## Claims

1. A television receiver that detects presence or absence of a color burst signal in a video signal input, and that determines that the video signal input is a color video signal if said color burst signal is present, and determines that the video signal input is a black-and-white video signal if said color burst signal is absent, said television receiver comprising:
an electric field intensity determining unit (M1) for determining an intensity of the electric field;
a burst gate unit (M2) for generating a burst gate pulse for detecting the color burst signal;
**characterized in that**
the electric field intensity determining unit (M1) is adapted for determining that the electric field intensity is normal if the intensity of the video signal is higher than a predetermined threshold value, and that the electric field intensity is weak if the intensity of the video signal is equal to or lower than the predetermined threshold value; and by further comprising
a first and a second register (17d, 17e) for storing a first and a second preset value, respectively; and
a microcomputer (17) to which said video signal is inputted and for generating the burst gate pulse to judge whether a color burst signal is detected in the burst gate pulse or not, the microcomputer (17) being adapted
for generating a first gate pulse that has a pulse width in accordance with the first preset value stored in the first register (17d) and, when the electric field intensity determining unit (M1) determines that the electric field intensity is normal, the first gate pulse including a standard position of the color burst signal specified by the broadcasting signal protocol and starting from the latter half of horizontal synchronization signal,
for generating a second gate pulse that has a pulse width in accordance with the second preset value stored in the second register (17e), when the electric field intensity determining unit (M1) determines that the electric field intensity is weak, the second gate pulse being narrower than the first burst gate pulse and including the standard position, and
for detecting the color burst signal within a range of one of a first burst gate pulse or a second burst gate pulse.

2. The television receiver according to claim 1, wherein immediately after the power is switched on, said burst gate unit (M2) generates the first burst gate pulse to detect the color burst signal.

3. The television receiver according to claim 1 or 2, wherein said burst gate pulse generated in case the electric field is judged weak by said electric field intensity judging unit, is profiled as 7.559-8.500 microseconds for the time length from the horizontal synchronization datum to the end of the burst gate pulse and 4.500-4.596 microseconds for the time length from the horizontal synchronization datum to the start of the burst gate pulse.

4. The television receiver according to any of claims 1 to 3, comprising an automatic gain control circuit (16) to perform automatic gain control of intermediate frequency signal, wherein said electric field intensity judging unit performs judgment of the electric field based on the intermediate frequency automatic gain control voltage outputted from said automatic gain control circuit (16).

5. A television receiver according to claim 4, further comprising:
a tuner (10) that selects a carrier frequency of a certain channel from video signal input through an antenna and converts the video signal to an output of intermediate frequency, an intermediate frequency signal amplifier circuit (11) that amplifies the intermediate frequency signal to a necessary intensity at an amplification factor corresponding to intermediate frequency-automatic gain control voltage, and outputs the amplified signal,
a video detection circuit (12) that extracts a decoding video signal from the intermediate frequency signal and outputs the decoding video signal,
a video signal processing circuit (13) that performs amplification of the composite video signal output from said video detection circuit, carries out brightness/chroma separation to output brightness signal and carrier chrominance signal, and conducts synchronizing separation to output synchronizing signal,
a chrominance demodulation circuit (13b) that demodulates said carrier chrominance signal into a color-difference signal and outputs the color-difference signal by utilizing the frequency of a color burst signal when there is input of the color burst signal,
a matrix circuit (13c) that creates red-green-blue signal as picture data by performing matrix conversion processing based on said brightness signal and said color-difference signal,
a liquid crystal driver circuit (14) that displays pictures by driving a liquid crystal module based on said red-green-blue signal, and
wherein the automatic gain control circuit (16) obtains a composite video signal from said video detection circuit and generates an intermediate frequency-automatic gain control voltage corresponding to the intensity of a synchronization signal of said decoding video signal,
wherein the microcomputer (17) is further adapted for controlling said tuner (10), said intermediate frequency signal amplifier circuit (11), said video detection circuit (12), said automatic gain control circuit (16), said video signal processing circuit (13), said chrominance demodulation circuit (13b), said matrix circuit (13c), and said liquid crystal driver circuit (14),
said microcomputer (17) being further adapted for
(i) receiving input of the decoding video signal from said video detection circuit (12) along with the intermediate frequency-automatic gain control voltage from said automatic gain control circuit (16), being in oscillation in the frequency of chrominance subcarrier, and measuring electric field intensity of airwaves incoming to the antenna according to said intermediate frequency-automatic gain control voltage,
(ii) determining, if said electric field intensity is higher than a threshold value in terms of voltage, that the electric field is normal and acquiring the preset values of the burst gate pulse for normal electric field intensity from said first register (17d), and determining, if said electric field intensity is equal to or lower than the threshold value in terms of voltage, that the electric field is weak and acquires the preset values of the burst gate pulse for weak electric field intensity from said second register (17e),
(iii) generating the burst gate pulse in accordance with the preset value thus acquired, applying synchronous detection to a portion covered within a range of the burst gate pulse of the video detection output, detecting if any frequency signal synchronous with the frequency of said chrominance subcarrier is contained continuously for a preset number of cycles or more, determining if any color burst signal is present within the range of the burst gate pulse, when the synchronous detection proves affirmative, the detected color burst signal is output to said chrominance demodulation circuit, if the detected color burst signal is not output to said chrominance demodulation circuit, the synchronous detection proves negative.

## Patentansprüche

1. Fernsehempfänger, der Vorhandensein oder Nichtvorhandensein eines Farbsynchronsignals in einem Videosignal-Eingang erfasst und feststellt, dass der Videosignal-Eingang ein Farb-Videosignal ist, wenn das Farbsynchronsignal vorhanden ist, und feststellt, dass der Videosignal-Eingang ein Schwarz-Weiß-Videosignal ist, wenn das Farbsynchronsignal nicht vorhanden ist, wobei der Fernsehempfänger umfasst:
eine Einheit (M1) zum Feststellen einer elektrischen Feldstärke, mit der eine Stärke des elektrischen Feldes festgestellt wird;
eine Burstgate-Einheit (M2) zum Erzeugen eines Burstgate-Impulses, mit dem das Farbsynchronsignal erfasst wird;
**dadurch gekennzeichnet, dass**
die Einheit (M1) zum Feststellen einer elektrischen Feldstärke so eingerichtet ist, dass sie feststellt, dass die Stärke des elektrischen Feldes normal ist, wenn die Stärke des Videosignals höher ist als ein vorgegebener Schwellenwert, und dass die Stärke des elektrischen Feldes gering ist, wenn die Stärke des Videosignals genauso hoch ist wie oder niedriger als der vorgegebene Schwellenwert, und **dadurch**, dass er des Weiteren umfasst:
ein erstes und ein zweites Register (17d, 17e) zum Speichern eines ersten bzw. eines zweiten voreingestellten Wertes; und
einen Mikrocomputer (17), in den das Videosignal eingegeben wird und mit dem der Burstgate-Impuls erzeugt wird, um zu beurteilen, ob ein Farbsynchronsignal in dem Burstgate-Impuls erfasst wird oder nicht, wobei der Mikrocomputer (17) so eingerichtet ist, dass er:
einen ersten Gate-Impuls erzeugt, der eine Impulsbreite hat, die dem in dem ersten Register (17d) gespeicherten voreingestellten Wert entspricht, und, wenn die Einheit (M1) zum Feststellen einer elektrischen Feldstärke feststellt, dass die Stärke des elektrischen Feldes normal ist, der erste Gate-Impuls eine Standardposition des Farbsynchronsignals enthält, die durch das Rundfunk-Signalprotokoll spezifiziert wird, und von der letzten Hälfte eines Horizontalsynchronsignals ausgehend beginnt,
einen zweiten Gate-Impuls erzeugt, der eine Impulsbreite hat, die dem in dem zweiten Register (17e) gespeicherten voreingestellten Wert entspricht, wenn die Einheit (M1) zum Feststellen einer elektrischen Feldstärke feststellt, dass die Stärke des elektrischen Feldes gering ist, wobei der zweite Gate-Impuls schmaler ist als der erste Gate-Impuls und die Standardposition einschließt, und
das Farbsynchronsignal innerhalb eines Bereiches eines ersten Burstgate-Impulses oder eines zweiten Burstgate-Impulses erfasst.

2. Fernsehempfänger nach Anspruch 1, wobei unmittelbar nachdem der Strom eingeschaltet wird, die Burstgate-Einheit (M2) den ersten Burstgate-Impuls erzeugt, um das Farbsynchronsignal zu erfassen.

3. Fernsehempfänger nach Anspruch 1 oder 2, wobei der Burstgate-Impuls, der erzeugt wird, wenn durch die Einheit zum Feststellen einer elektrischen Feldstärke beurteilt wird, dass das elektrische Feld schwach ist, auf 7,559-8,500 Mikrosekunden für die Zeitlänge von dem Horizontalsynchron-Datum zu dem Ende des Burstgate-Impulses und auf 4,500-4,596 Mikrosekunden für die Zeitlänge von dem Horizontalsynchron-Datum zu dem Beginn des Burstgate-Impulses profiliert ist.

4. Fernsehempfänger nach einem der Ansprüche 1 bis 3, der eine automatische Verstärkungsregelungsschaltung (16) zur Durchführung einer automatischen Verstärkungsregelung eines Zwischenfrequenzsignals umfasst, wobei die Einheit zum Feststellen einer elektrischen Feldstärke eine Beurteilung des elektrischen Feldes auf Basis der von der automatischen Verstärkungsregelungsschaltung (16) ausgegebenen Spannung der automatischen Verstärkungsregelung der Zwischenfrequenz durchführt.

5. Fernsehempfänger nach Anspruch 4, der des Weiteren umfasst:
einen Tuner (10), der eine Trägerfrequenz eines bestimmten Kanals aus Videosignal-eingang über eine Antenne auswählt und das Videosignal in einen Zwischenfrequenz-Ausgang umwandelt,
eine Zwischenfrequenzsignal-Verstärkerschaltung (11), die das Zwischenfrequenzsignal auf eine erforderliche Stärke mit einem Verstärkungsfaktor verstärkt, der der Spannung der automatischen Verstärkungsregelung der Zwischenfrequenz entspricht, und das verstärkte Signal ausgibt,
eine Videoerfassungsschaltung (12), die ein Decodier-Videosignal aus dem Zwischenfrequenzsignal extrahiert und das Decodier-Videosignal ausgibt,
eine Videosignal-Verarbeitungsschaltung (13), die eine Verstärkung des zusammengesetzten Videosignals durchführt, das von der Videoerfassungsschaltung ausgegeben wird, eine Helligkeits-/Farbwert-Trennung ausführt, um ein Helligkeitssignal und
ein Träger-Farbwertsignal auszugeben, und eine Synchronisierungstrennung durchführt, um ein Synchronisierungssignal auszugeben,
eine Farbwert-Demodulationsschaltung (13b), die das Träger-Farbwertsignal zu einem Farbdifferenzsignal demoduliert und das Farbdifferenzsignal unter Verwendung der Frequenz eines Farbsynchronsignals ausgibt, wenn Eingang des Farbsynchronsignals vorliegt,
eine Matrixschaltung (13), die ein Rot-Grün-Blau-Signal als Bilddaten erzeugt, indem sie eine Matrixumwandlungsverarbeitung auf Basis des Helligkeitssignals und des Farbdifferenzsignals durchführt,
eine Flüssigkristall-Ansteuerschaltung (14), die Bilder anzeigt, indem sie ein Flüssigkristallmodul auf Basis des Rot-Grün-Blau-Signals ansteuert, und
wobei die automatische Verstärkungsregelungsschaltung (16) ein zusammengesetztes Videosignal von der Videoerfassungsschaltung bezieht und eine Spannung der automatischen Verstärkungsregelung der Zwischenfrequenz erzeugt, die der Stärke eines Synchronisiersignals des Decodier-Videosignals entspricht,
wobei der Mikrocomputer des Weiteren so eingerichtet ist, dass er den Tuner (10), die Zwischenfrequenzsignal-Verstärkerschaltung (11), die Videoerfassungsschaltung (12), die automatische Verstärkungsregelungsschaltung (16), die Videosignal-Verarbeitungsschaltung (13), die Farbwert-Demodulationsschaltung (13b), die Matrixschaltung (13c) und die Flüssigkristall-Ansteuerschaltung (14) steuert,
und wobei der Mikrocomputer (17) des Weiteren so eingerichtet ist, dass er:
I) Eingang des Decodier-Videosignals von der Videoerfassungsschaltung (12) zusammen mit der Spannung der automatischen Verstärkungsregelung der Zwischenfrequenz von der automatischen Verstärkungsregelungsschaltung (16) in der Frequenz des Farb-Teilträgers schwingend empfängt, und die elektrische Feldstärke von Funkwellen, die an der Antenne eingehen, entsprechend der Spannung der automatischen Verstärkungsregelung der Zwischenfrequenz misst,
II) wenn die Stärke des elektrischen Feldes bezüglich der Spannung höher ist als ein Schwellenwert, feststellt, dass das elektrische Feld normal ist und die voreingestellten Werte des Burstgate-Impulses für normale Stärke des elektrischen Feldes aus dem Register (17d) bezieht, und, wenn die Stärke des elektrischen Feldes genauso hoch ist wie oder niedriger als der Schwellenwert hinsichtlich der Spannung, feststellt, dass das elektrische Feld schwach ist, und die voreingestellten Werte des Burstgate-Impulses für niedrige Stärke des elektrischen Feldes aus dem zweiten Register (17e) bezieht,
III) den Burstgate-Impuls entsprechend dem so bezogenen voreingestellten Wert erzeugt, Synchronerfassung auf einen Abschnitt anwendet, der innerhalb eines Bereiches des Burstgate-Impulses des Videoerfassungsausgang liegt, erfasst, ob ein Frequenzsignal, das synchron zur Frequenz des Farbwert-Teilträgers ist, kontinuierlich über eine vorgegebene Anzahl von Zyklen oder mehr enthalten ist, feststellt, ob ein Farbsynchronsignal innerhalb des Bereiches des Burstgate-Impulses vorhanden ist, wenn die Synchronerfassung positiv ausfällt, und das erfasste Farbsynchronsignal an die Farbwert-Demodulationsschaltung ausgegeben wird, und wenn das erfasste Farbsynchronsignal nicht an die Farb-Demodulationsschaltung ausgegeben wird, die Synchronerfassung negativ ausfällt.

## Revendications

1. Récepteur de télévision qui détecte la présence ou l'absence d'un signal de salve couleur dans une entrée de signal vidéo, et qui détermine que l'entrée de signal vidéo est un signal vidéo couleur si ledit signal de salve couleur est présent, et détermine que l'entrée de signal vidéo est un signal vidéo noir et blanc si ledit signal de salve couleur est absent, ledit récepteur de télévision comprenant :
une unité de détermination d'intensité de champ électrique (M1) pour déterminer une intensité du champ électrique ;
une unité de commande de salve (M2) pour générer une impulsion de commande de salve pour détecter le signal de salve couleur ;
**caractérisé en ce que**
l'unité de détermination d'intensité de champ électrique (M1) est adaptée pour déterminer que l'intensité de champ électrique est normale si l'intensité du signal vidéo est supérieure à une valeur de seuil prédéterminée, et que l'intensité de champ électrique est faible si l'intensité du signal vidéo est égale ou inférieure à la valeur de seuil prédéterminée ; et **en ce qu'**il comprend en outre
des premier et deuxième registres (17d, 17e) pour mémoriser des première et deuxième valeurs présélectionnées, respectivement ; et
un micro-ordinateur (17) auquel ledit signal vidéo est appliqué et pour générer l'impulsion de commande de salve pour juger si un signal de salve couleur est détecté ou non dans l'impulsion de commande de salve, le micro-ordinateur (17) étant adapté
pour générer une première impulsion de commande qui a une durée d'impulsion fonction de la première valeur présélectionnée mémorisée dans le premier registre (17d) et, lorsque l'unité de détermination d'intensité de champ électrique (M1) détermine que l'intensité de champ électrique est normale, la première impulsion de commande comprenant une position standard du signal de salve couleur spécifiée par le protocole de signal de diffusion et commençant par la dernière moitié du signal de synchronisation horizontale,
pour générer une deuxième impulsion de commande qui a une durée d'impulsion fonction de la deuxième valeur présélectionnée mémorisée dans le deuxième registre (17e), lorsque l'unité de détermination d'intensité de champ électrique (M1) détermine que l'intensité de champ électrique est faible, la deuxième impulsion de grille étant plus étroite que la première impulsion de commande de salve et comprenant la position standard, et
pour détecter le signal de salve couleur dans une plage de l'une d'une première impulsion de commande de salve ou d'une deuxième impulsion de commande de salve.

2. Récepteur de télévision selon la revendication 1, dans lequel, immédiatement après que la puissance a été activée, ladite unité de commande de salve (M2) génère la première impulsion de commande de salve pour détecter le signal de salve couleur.

3. Récepteur de télévision selon la revendication 1 ou 2, dans lequel ladite impulsion de commande de salve générée dans le cas où le champ électrique est jugé comme étant faible par ladite unité de jugement d'intensité de champ électrique, a un profil de 7,559 à 8,500 microsecondes pendant la durée de la référence de synchronisation horizontale jusqu'à la fin de l'impulsion de commande de salve et de 4,500 à 4,596 microsecondes pendant la durée de la référence de synchronisation horizontale jusqu'au début de l'impulsion de commande de salve.

4. Récepteur de télévision selon l'une quelconque des revendications 1 à 3, comprenant un circuit de commande de gain automatique (16) pour appliquer une commande de gain automatique au signal de fréquence intermédiaire, dans lequel ladite unité de jugement d'intensité de champ électrique porte un jugement quant au champ électrique sur la base de la tension de commande de gain automatique de fréquence intermédiaire délivrée par ledit circuit de commande de gain automatique (16).

5. Récepteur de télévision selon la revendication 4, comprenant en outre :
un syntoniseur (10) qui sélectionne une fréquence de porteuse d'un certain canal à partir d'un signal vidéo entré par l'intermédiaire d'une antenne et convertit le signal vidéo en une sortie de fréquence intermédiaire,
un circuit d'amplification de signal de fréquence intermédiaire (11) qui amplifie le signal de fréquence intermédiaire à une intensité nécessaire avec un coefficient d'amplification correspondant à une tension de commande de gain automatique de fréquence intermédiaire, et délivre le signal amplifié,
un circuit de détection vidéo (12) qui extrait un signal vidéo de décodage du signal de fréquence intermédiaire et délivre le signal vidéo de décodage,
un circuit de traitement de signal vidéo (13) qui effectue une amplification du signal vidéo composite délivré par ledit circuit de détection vidéo, effectue une séparation luminosité/chrominance pour délivrer un signal de luminosité et un signal de chrominance, et effectue une séparation de synchronisation pour délivrer un signal de synchronisation,
un circuit de démodulation de chrominance (13b) qui démodule ledit signal de chrominance en un signal de différence de couleur et délivre le signal de différence de couleur en utilisant la fréquence d'un signal de salve couleur lorsqu'il y a une entrée du signal de salve couleur,
un circuit de matrice (13c) qui crée un signal rouge-vert-bleu en tant que données d'image en effectuant un traitement de conversion de matrice sur la base dudit signal de luminosité et dudit signal de différence de couleur,
un circuit de commande de cristal liquide (14) qui affiche des images en commandant un module de cristal liquide sur la base dudit signal rouge-vert-bleu, et
dans lequel le circuit de commande de gain automatique (16) obtient un signal vidéo composite dudit circuit de détection vidéo et génère une tension de commande de gain automatique de fréquence intermédiaire correspondant à l'intensité d'un signal de synchronisation dudit signal vidéo de décodage,
dans lequel le micro-ordinateur (17) est en outre adapté pour commander ledit syntoniseur (10), ledit circuit d'amplification de signal de fréquence intermédiaire (11), ledit circuit de détection vidéo (12), ledit circuit de commande de gain automatique (16), ledit circuit de traitement de signal vidéo (13), ledit circuit de démodulation de chrominance (13b), ledit circuit de matrice (13c), et ledit circuit de commande de cristal liquide (14),
ledit micro-ordinateur (17) étant en outre adapté pour
(i) recevoir une entrée du signal vidéo de décodage dudit circuit de détection vidéo (12) avec la tension de commande de gain automatique de fréquence intermédiaire provenant dudit circuit de commande de gain automatique (16), être en oscillation à la fréquence de sous-porteuse de chrominance, et mesurer une intensité de champ électrique d'onde hertziennes reçues par l'antenne conformément à ladite tension de commande de gain automatique de fréquence intermédiaire,
(ii) déterminer, si ladite intensité de champ électrique est supérieure à une valeur de seuil en termes de tension, que le champ électrique est normal et acquérir les valeurs présélectionnées de l'impulsion de commande de salve pour une intensité de champ électrique normale auprès dudit premier registre (17d), et déterminer, si ladite intensité de champ électrique est égale ou inférieure à la valeur de seuil en termes de tension, que le champ électrique est faible et acquérir les valeurs présélectionnées de l'impulsion de commande de salve pour une faible intensité de champ électrique auprès dudit deuxième registre (17e),
(iii) générer l'impulsion de commande de salve en fonction de la valeur présélectionnée ainsi acquise, appliquer une détection synchrone à une partie couverte dans une plage de l'impulsion de commande de salve de la sortie de détection vidéo, détecter si un quelconque signal de fréquence synchrone avec la fréquence de ladite sous-porteuse de chrominance est contenu continûment pendant un nombre de cycles présélectionné ou plus, déterminer si un quelconque signal de salve couleur est présent dans la plage de l'impulsion de commande de salve, lorsque la détection synchrone s'avère affirmative, le signal de salve couleur détecté est délivré audit circuit de démodulation de chrominance, si le signal de salve couleur détecté n'est pas délivré audit circuit de démodulation de chrominance, la détection synchrone s'avère négative.
